# EUROPEAN PATENT APPLICATION

(11) **EP 2 641 479 A1**
(43) Date of publication of application: **25.09.2013**
(21) Application number: 12001955.9
(22) Date of filing: 20.03.2012
(51) Int. Cl.: A23L 1/30, A23L 1/226, A23L 1/236, A23L 2/60, A23L 1/22

(54) **Composition comprising an extract from sweet blackberry leaves**

(71) Applicant: Rudolf Wild GmbH & Co. KG, 69214 Eppelheim (DE)
(72) Inventor: Müller, Manfred, 13585 Berlin (DE); Herrmann, Markus, 13595 Berlin (DE); Polunin, Ines, 14089 Berlin (DE); Toews, Kerstin, 16556 Borgsdorf (DE)
(74) Representative: Grünecker, Kinkeldey, Stockmair & Schwanhäusser

(57) **Abstract**

The present invention relates to a composition comprising at least one extract from sweet blackberry leaves and at least one extract or isolate comprising an isoprenoid; a food or beverage product comprising the composition and the use of the composition as a flavor enhancer, sweetness enhancer or masking agent.

## Description

The present invention relates to a composition for the preparation of low-calorie food or beverage products.

Obesity and Type II Diabetes are an increasing problem in industrialized countries and are most commonly caused by a combination of excessive dietary calories with other indications such as a lack of physical activity or genetic susceptibility.

Natural caloric sugars, such as sucrose, fructose, and glucose are commonly utilized in food and beverages as sweeteners. However, the amount added to achieve the desired effect increases the calorie content of the sweetened product significantly. Due to an increase of Type II diabetes and the fact that the consumers become more health conscious, a reduction of the daily intake of sugar is sought and low-caloric products are desirable.

For the production of sugar-free or sugar-reduced food products, a number of artificial sweeteners are known. However, those artificial sweeteners commonly have an undesirable metallic aftertaste. Furthermore, the desire of the consumer of natural ingredients has recently increased considerably.

In this context plants and plant extracts having sweetening characteristics are of particular interest, in particular such plants or plant extracts which in addition with other sweetening agents show a synergistic effect.

Steviol glycosides are known as a natural high-intensity sweetener and are used as traditional medicine since centuries. A high-intensity sweetener is a compound with sweetness that is many times that of sucrose. As a result, much less sweetener is required, and energy contribution is often negligible. Steviol glycosides are naturally occurring compounds and can be extracted from *Stevia rebaudiana.* The four major steviol glycosides found in the stevia plant tissue are stevioside, rebaudioside A, rebaudioside C and dulcoside A. However, steviol glycosides are known to have a bitter, metallic aftertaste.

Another plant which is known to have a sweet taste by its own is the sweet blackberry, a plant of the genus rubus, also known as Chinese Blackberry. Sweet blackberry leaves are commonly used in herbal teas. The leaves of Chinese Blackberry (*Rubus suavissimus,* aka *R. chingii* and *R. palmatus*) contain the sweet glycoside rubusoside (β-D-glucosylester of 13-O-β-D-glucosylsteviol) in an amount of approximately 5 to 9 wt %. Rubusoside is approximately 200 times as sweet as cane sugar and is therefore of interest as a low-calorie sweetener.

EP-A-2236043 discloses a process for the preparation of an extract of leaves of sweet blackberry, in particular for use as a fluid ingredient. However, the extract of sweet blackberry leaves is used as the single sweetening composition. A combination of rubusoside with other sweeteners is not described in the application.

WO-A-2010/96055 discloses a sweetening composition comprising an extract from sweet blackberry leaves and honey. The document furthermore teaches that at least one sweetener other than the sweet blackberry leaves and honey may be present in the sweetening composition to enhance the sweetening effect. Moreover, the desired sweetening effect is only obtained when the ratio of the sweet blackberry leaves extract to honey is from about 1 : 15 to about 20 : 1. Outside of those ranges, the product taste is off-balance.

WO-A-2008/049256 describes sweetened consumables comprising a natural sweetener, such as sucrose, fructose, glucose etc. or an artificial sweetener and further comprising mogroside V/swingle extract, rubus extract or naringin dihydrochalcone in a low concentration to enhance the sweetness of the sweetener.

US-A-2002/0132037 is directed to an herbal sweetener composition comprising a naturally occurring sugar and a terpene glycoside. The terpene glycoside may be derived or extracted from edible botanical or herbs, e.g. Momordica, Cucurbitaceae, *Rubus suavissimus, Stevia rebaudia,* kiwi and mixtures thereof. The document furthermore describes that the resulting composition is approximately 8 times as sweet as refined sugar.

US-A-2009/0061016 relates to a seawater based composition with improved antioxidant content for sweet functional food beverage products. Those compounds may contain extracts derived from the fruits of Lo Han, extracts derived from the leaves of Stevia and/or extracts derived from the leaves of Chinese blackberry, and extracts derived from the fruit of the Seville orange. This document describes a great tasting herbal product with beneficial therapeutic properties, but is silent about a sweetening enhancing effect of sweet blackberry leaf extracts.

US-A-2009/0035427 discloses a sweet tea comprising the extracts of tea leaves and extracts of sweet blackberry leaves. This document further describes that an unsweetened or undersweetened tea can be sweetened with a rubusoside extract.

US-A-2008/0311252 discloses a chocolate-based composition with improved antioxidant content and taste, which comprises at least one extract of the fruits of Lo Han, from the leaves of Stevia and extracts from the leaves of Chinese blackberry.

JP-A-2008-024695 discloses a capsule comprising a sweetener, such as aspartame, sucralose, acesulfam, stevia or xylitol. Those capsules further comprise a coating layer comprising an herb As one possibility of the herb, blackberry is mentioned. However, this document does not specify which parts of the blackberry are used and what blackberry species might be present. Furthermore, a sweetening effect of the herb compound is not at all mentioned.

WO-A-2006/048191 relates to dry flavoring compositions containing an extract of blackberry leaves. However, the blackberry leaves are not specified and a sweetening effect of the blackberry leaves is not mentioned.

WO-A-2004/008870 discloses an instant beverage powder comprising an extract from plants or plant parts. As one possible plant leaves from blackberries are mentioned. However, the blackberry extract is not further specified. Furthermore, a sweetening or sweetening enhancing effect is not described.

Moreover, none of those documents describes or mentions the suppression of an undesired aftertaste.

EP-A-2386211 is directed to the use of rubusoside for use in masking, reducing or eliminating a bitter, sour and/or adstringent aftertaste. However, the presence of at least one isoprenoid is not described in that document.

An extract rich in isoprenoids, such as terpenes and terpenoids, can be obtained from plants such as myrtle. Myrtle is a genus of plants in the family Myrtaceae, native to southern Europe and North Africa. The leaves contain a fragrant essential oil. One species of the genus myrtle is the common myrtle *Myrtus communis.* Myrtle essential oil is used as a herbal medicine for respiratory diseases, such as sinus infections, and is also known to have an aromatic taste and is used as flavoring substance in food products.

Myrtle essential oil is usually obtained from steam distillation of leaves and twigs of myrtle and contains mono- and sesquiterpenes and terpenoids, such as 1,8-cineol, α-pinen, myrtenol, myrtenyl acetate, linalool, limonene, campher, β-pinen, α-terpineol, nerol, geraniol, linalyl acetate, α-terpinyl acetate, neryl acetate, geranyl acetate and methyl eugenol. The composition of myrtle essential oil differs significantly based on the source of myrtle (Hagers Handbuch der Pharmazeutischen Praxis, Drogen E - O, 5., vollständig neubearbeitete Auflage, Springer Verlag 1993, 904 - 910).

The problem underlying the present invention is to provide a composition which has a pleasant taste, is healthy, contains natural components, allows for a significant reduction in calories and is able to mask an unpleasant aftertaste.

Said problem is solved by a composition comprising at least one extract from sweet blackberry leaves and at least one extract or isolate comprising an isoprenoid.

The problem of the present invention is also solved by a food product or a beverage comprising the composition according to the present invention.

The problem of the present invention is further solved by the use of a composition in accordance with the present invention as a flavor enhancer, sweetness enhancer or masking agent.

Preferred embodiments of the invention are set forth in the subclaims 2 to 13.

According to the invention, the term "extract" is used representatively for all products that are obtained from a plant by means of an extraction with a solvent, such as with maceration or percolation. The extract may be in liquid, semi-solid or solid form.

As for the extraction, the parts of the plant are submitted either in the raw state or dried to maceration or percolation. In a preferred embodiment, the dried plant material is used.

The plant parts can be broken into small pieces in a suitable manner before the extraction, by means of rubbing or cutting them, for example. Alternatively, the plant parts can be pressed out directly after the harvest, meaning in the raw state, in order to produce a juice from pressing before the extraction.

Generally, an extraction of the plant parts including leaves, twigs and blossoms is performed with a suitable solvent. Suitable solvents are water, alcohols, such as methanol, ethanol or isopropyl alcohol, or chlorinated solvents, such as dichloromethane, as well as acetone, acetylacetone, ethylacetate, ammonia or glacial acetic acid, but also supercritical carbon dioxide. Mixtures of the solvents mentioned ,can also be used. Preferably, water is used as the solvent for extraction. Furthermore, fats, such as pork fat, waxes, such as beeswax, or oils, such as olive oils and almond oil, can also be used for the extraction.

In order to achieve the highest possible yield, the plant material can be extracted a number of times. Preferably, the extraction is repeated 2 to 6 times, more preferably 3 times. In this case, it is also possible to use different solvents in the various extraction steps or an extraction with a solvent can be followed by an extraction with fat, wax or oil, or vice versa.

A maceration procedure is normally performed in 5 to 9 days, preferably for 7 days, at room temperature with a mixture of water and ethanol, by pouring the solvent mixture over the plant elements and letting this stand for the period of time mentioned.

The crude extraction product can also be concentrated and/or dried and/or further processed before use. To produce a dry extract, the solvent can be withdrawn from the liquid raw extract, the concentrated extract or the cleaned extract by, for example, spray drying, freeze drying or vacuum drying. The further processing can include cleaning steps known to the person skilled in the art, such as centrifugation, filtration and decantation, in order to remove suspended materials from the extract. Chromatography, such as column chromatography, gas chromatography or HPLC or steam distillation may also be used for purification. In a preferred embodiment the crude product is used without further purification steps.

According to the invention, the term "isolate" is used representatively for all products that are isolated and purified from a crude extract or raw material. The isolates may be obtained by chromatography, such as column chromatography, gas chromatography or HPLC or by distillation, such as microdistillation. Preferably, the isolate is obtained by microdistillation.

According to the invention, the term "isoprenoid" refers to compounds formally derived from isoprene (2-methylbuta-1,3-diene), the skeleton of which can generally be discerned in repeated occurrence in the molecule. The skeleton of isoprenoids may differ from strict additivity of isoprene units by loss or shift of a fragment, commonly a methyl group. The class includes both hydrocarbons (such as terpenes) and oxygenated derivatives (such as terpenoids).

Terpenes are hydrocarbons having carbon skeletons formally derived from isoprene and can be subdivided based on the number of isoprene units into the C₅ hemiterpenes, C₁₀ monoterpenes, C₁₅ sesquiterpenes, C₂₀ diterpenes, C₂₅ sesterterpenes, C₃₀ triterpenes, C₄₀ tetraterpenes and C_{5*n*} polyterpenes.

Terpenoids are natural products and related compounds formally derived from isoprene units. They contain oxygen in various functional groups. This class is subdivided according to the number of carbon atoms in the same manner as terpenes. The skeleton of terpenoids may differ from strict additivity of isoprene units by the loss or shift of a fragment, generally a methyl group.

In a preferred embodiment in combination with any one of the above or below embodiments (b) is a myrtle extract or isolate, more preferably an extract or isolate from *Myrtus communis.*

In a further preferred embodiment in combination with any one of the above or below embodiments the isoprenoid is selected from the group consisting of 1,8-cineol, α-pinen, myrtenol, myrtenyl acetate, linalool, limonene, campher, β-pinen, α-terpineol, nerol, geraniol, linalyl acetate, α-terpinyl acetate, neryl acetate, geranyl acetate, methyleugenol and/or a mixture thereof. More preferably, the isoprenoind is a mixture of myrtenyl acetate, linalool, and α-terpineol, especially myrtenyl acetate.

The extract (a) from sweet blackberry leaves, in a preferred embodiment in combination with any one of the above or below embodiments, comprises 1 to 98 wt% of rubusoside, based on the weight of the sweet blackberry leaves extract. More preferably the extract comprises 5 to 20 wt%, in particular 10 to 18 wt% of rubusoside.

The extract (a) is obtained according, to standard extraction procedures known to the person skilled in the art. Preferably, sweet blackberry leaves are extracted with water of a temperature of from 60 to 80 °C for 1 to 5 h. Afterwards the solids are removed by decantation or centrifugation and the residue is concentrated. The concentrate, preferably, can be cooled to 0 to 5 °C and again decanted and/or centrifuged. The remaining residue, in a further preferred embodiment, can be further concentrated and/or pasteurized. In another preferred embodiment in combination with any one of the above or below embodiments, the extract (a) is spray dried to a powder.

In a preferred embodiment in combination with any one of the above or below embodiments, the final extract (a) has a Brix of 45 to 80 °Bx, more preferably 50 to 70 °Bx, in particular 55 to 65 °Bx.

The term "°Bx" (degrees Brix) refers to a unit representing the soluble solid content in a solution. One degree Brix corresponds to 1 gram of saccharose in 100 grams of saccharose/water solution and thus represents the concentration of the solution as a percentage by weight (% w/w). A solution has 1 °Bx if the density of said solution is the same as a solution of 1 gram of saccharose in 100 grams of saccharose/water solution. The °Bx is usually measured by means of a refractometer.

In a further preferred embodiment in combination with any one of the above or below embodiments the amount of dry matter in the extract (a) is from 2 to 98 wt%, more preferably 20 to 60 wt%, in particular 40 to 50 wt%.

The dry matter is a measurement of the mass when completely dried. The dry matter of an extract is the amount of all solid constituents excluding water.

The composition according to the present invention is obtained by mixing (a) and (b) according to standard procedures well-known to the person skilled in the art.

In a preferred embodiment in combination with any one of the above or below embodiments, the weight ratio of (a) to (b) in the composition of the present invention is from 10000 :1 to 1 : 10000, more preferably from 5000 : 1 to 1 : 5000, in particular 5000 : 1.

In another preferred embodiment in combination with any one of the above or below embodiments, the composition in accordance with the present invention further comprises at least one sweetener. The sweetener may be selected from the group of natural sweeteners and artificial sweeteners or mixtures thereof. Common natural sweeteners are saccharose, fructose, glucose, corn syrup, high fructose corn syrup, xylose, arabinose, rhamnose, xylitol, mannitol, sorbitol, inositol, honey, steviol glycosides, neohesperidine, isomalt, taumatine, maltitol, maltitol syrup, lactitol, agave nectar, and invert sugar syrup. Common artificial sweeteners are aspartame, acesulfame, neotame, sucralose, saccharine, and sodium cyclamate. More preferably, the composition of the present invention comprises at least one natural sweetener, or a mixture of two or more natural sweeteners. Most preferably, the composition according to the present invention comprises saccharose, steviol glycosides, invert sugar syrup or mixtures thereof. If an artificial sweetener is present, the artificial sweetener is preferably aspartame, acesulfame, sucralose, saccharine, sodium cyclamate.

Preferably, in combination with any one of the above or below embodiments, the sweetener is present in an amount of from 1 to 99 wt%, more preferably 5 to 45 wt%, in particular 10 to 30 wt%, based on the total weight of the composition.

In a further preferred embodiment in combination with any one of the above or below embodiments, the composition in accordance with the present invention additionally comprises at least one flavoring agent. Common flavoring agents are ethyl maltol, maltol, maltol derivatives, such as maltol isobutyrate; vanillin, ethyl vanillin, vanillic acid, furaneol, furaneol derivatives, such as ethyl furaneol, furaneol acetate, and homofuronol; heliotropin, γ-lactones and δ-lactones, such as γ-nonalactone, γ-undecalactone, δ-decalactone, and massoia lactone; coumarine and derivatives thereof, such as dihydrocoumarin; fruit esters, such as ethyl propionate, ethyl butyrate, butyl butyrate, isoamyl acetate, isoamyl butyrate, allyl caproate, ethyl caprylate, anisyl acetate, diethyl malonate, and diethyl succinate; furfural, 5-methylfurfural, phenyl ethanal, p-hydroxybenzyl acetone, p-hydroxybenzaldehyde, and trans-cinnamic acid.

Preferably, in combination with any one of the above or below embodiments, the flavoring agent is present in an amount of from 0.004 to 99 wt%, more preferably 0.008 to 50 wt%, in particular 0.08 to 5 wt%, based on the total weight of the composition.

In another preferred embodiment in combination with any one of the above or below embodiments the composition according to the present invention further comprises at least one additional ingredient selected from the group of colorants, acidifiers, such as citric acid and trisodium citrate; preservatives, such as potassium sorbate; fruit concentrates, fruit and plant extracts and isolates, such as rosemary extract and plant polyphenols; vitamins, such as vitamin C; antioxidants, such as tocopherol; additives, such as silicic acid and magnesium carbonate; solvents, such as 1,2-propylene glycol, ethanol, diacetine, triacetine, glycerol, water, triethyl citrate, and glycerides from plant oils; carrier substances, such as gum Arabic, starch, maltodextrines, modified starches, xanthan, and polysaccharides; and mixtures of two or more additional ingredients.

In a further preferred embodiment in combination with any one of the above or below embodiments, the composition of the present invention is in liquid, solid or semi-solid form, more preferably the composition is in liquid form.

In another preferred embodiment in combination with any one of the above or below embodiments, the food or beverage product comprising the composition according to the present invention is a beverage, confectionary, or ice cream. Preferably, the food or beverage product comprises the composition of the present invention in an amount of 0.01 to 3 wt%, more preferably 0.1 to 1 wt%, in particular 0.5 to 0.8 wt%, based on the total weight of the food or beverage product.

The composition according to the present invention is used as a flavour enhancer, sweetness enhancer or masking agent.

Surprisingly, a composition comprising at least one extract of sweet blackberry leaves and at least one extract or isolate comprising an isoprenoid allows the reduction of sweetener in a sweetened beverage or food product of at least 10 wt% without lowering the sweetness taste.

Moreover, the composition according to the present invention masks the metallic aftertaste of an artificial sweetener.

The following examples further explain the invention

### Examples

### Example 1

A 5 wt% solution of saccharose was prepared. Separately, an extract of sweet blackberry leaves was prepared as follows:

100 g of sweet blackberry leaves were extracted with 1000 g of water for 1 h at 80 °C. The solids are removed by centrifugation and the remaining solution was concentrated to a Brix of 60°. A 5 wt% solution of the extract was prepared.

The saccharose solution (5 wt%) was combined with the blackberry leaves extract (5 wt%)in the ratios as shown in Table 1.

**Table 1**

| | **amount g/l water** | | | |
|---|---|---|---|---|
| **ingredients** | sample A | sample B | sample C | sample D |
| Saccharose, crystalline | 50 | 50 | 50 | 50 |
| extract of sweet blackberry leaves (5 wt% solution in water) | --- | 1 | 1,5 | 2 |

A sensory test was carried out as "difference from control". The samples were tested by 13 experienced test persons (male and female). Samples B to D were sensory tested for sweetness and mouth feel and compared with sample A. The samples were provided to the test persons in different order. The test persons were asked to indicate whether mouth feel and sweetness of samples B to D is lower, similar or higher compared to sample A.

Samples B and C showed a similar sweetness and mouth feel as sample A, sample D had a higher sweetness and better mouth feel.

### Example 2

Sample E was prepared by adding a solution of myrtenyl acetate (purity >90%; 0,01 wt% in ethanol) in the amount as indicted in Table 2 to sample D.

**Table 2**

| | **amount g/l water** | |
|---|---|---|
| **ingredients** | sample D | sample E |
| Saccharose, crystalline | 50 | 50 |
| extract of sweet blackberry leaves (5 wt% solution in water) | 2 | 2 |
| Myrtenyl acetate (purity >90%; 0,01 wt% in ethanol) | --- | 0,2 |

The samples D and E were again sensory tested for sweetness and mouth feel and compared. The test was carried out as described above with respect to Example 1 with 15 test persons (male and female).

Sample E had a higher sweetness and better mouth feel.

The example proves the synergisitic effect of myrtenyl acetate in combination with an extract of sweet blackberry leaves.

## Claims

1. A composition comprising:
(a) at least one extract from sweet blackberry leaves and
(b) at least one extract or isolate comprising an isoprenoid.

2. The composition according to claim 1, wherein (b) is a myrtle extract or isolate.

3. The composition according to claim 1 or 2, wherein the isoprenoid is myrtenyl acetate, linalool, α-terpineol, or a mixture thereof.

4. The composition according to any one of claims 1 to 3, wherein the extract (a) comprises 1 to 98 wt% of rubusoside, based on the weight of the sweet blackberry leaves extract.

5. The composition according to any one of claims 1 to 4, wherein the weight ratio of (a) to (b) is from 5000 : 1 to 1 : 5000.

6. The composition according to any one of claims 1 to 5, further comprising at least one sweetener.

7. The composition according to claim 6, wherein the sweetener is selected from the group consisting of saccharose, fructose, glucose, corn syrup, high fructose corn syrup, xylose, arabinose, rhamnose, xylitol, mannitol, sorbitol, inositol, honey, steviol glycosides, neohesperidine, isomalt, taumatine, maltitol, maltitol syrup, lactitol, agave nectar, invert sugar syrup, acesulfame, neotame, sucralose, saccharine, sodium cyclamate, or a mixture thereof.

8. The composition according to claim 6 or 7, wherein the sweetener is present in an amount of 1 to 99 wt%, based on the total weight of the composition.

9. The composition according to any one of claims 1 to 8, further comprising at least one flavoring agent.

10. The composition according to claim 9, wherein the flavoring agent is selected from the group consisting of ethyl maltol, maltol, maltol derivatives, vanillin, ethyl vanillin, vanillic acid, furaneol, furaneol derivatives, heliotropin, γ-lactones and δ-lactones, coumarine, coumarine derivatives, fruit esters, furfural, 5-methylfurfural, phenyl ethanal, p-hydroxybenzyl acetone, p-hydroxybenzaldehyde, trans-cinnamic acid, or a mixture thereof.

11. The composition according to any one of claims 1 to 10, further comprising at least one additional ingredient selected from the group colorants, acidifiers, preservatives, fruit concentrates, fruit extracts, plant extracts, plant isolates, vitamins, antioxidants, additives, solvents, carrier substances, or a mixture thereof.

12. The composition according to any one of claims 1 to 11, wherein the composition is in liquid, solid or semi-solid form.

13. A food or beverage product comprising the composition according to any one of claims 1 to 12.

14. Use of a composition according to any one of claims 1 to 12 as a flavor enhancer, sweetness enhancer or masking agent.
